# EUROPEAN PATENT APPLICATION

(11) **EP 4 831 926 A1**
(43) Date of publication of application: **28.10.2026**
(21) Application number: 25171846.6
(22) Date of filing: 23.04.2025
(51) Int. Cl.: G06T 11/60

(54) **METHOD AND SYSTEM FOR SEMANTIC SEGMENTATION-GUIDED OBJECT PLACEMENT FOR IMAGE AUGMENTATION**

(71) Applicant: Robert Bosch GmbH, 70442 Stuttgart (DE)
(72) Inventor: Feldman, Zohar, 35705 Haifa (IL); Shapiro, Yoel, 2751418 Kiryat Bialik (IL); Feldman, Yuri, 3508409 Haifa (IL)

(57) **Abstract**

A computer-implemented method for placement of an object in a target image by a placement network, in particular for image augmentation, wherein the placement network is configured to provide a placement proposal based on a first and a second input received, wherein the method comprises receiving (11) the first input of the placement network comprising one or more semantic segmentation maps of the target image, receiving (12) the second input of the placement network comprising one or more objects represented by one or more semantic segmentation maps, providing (13) one or more placement proposals by the placement network based on the first and second input, receiving (14) a first input to a blending component comprising the target image represented by a raster image version of the first input to the placement network, receiving (15) a second input to the blending component comprising one or more objects represented by a raster image version of the second input to the placement network, incorporating (16) the one or more objects of the second input into the target image by the blending component according to one of the placement proposals.

## Description

### Field of the invention

The presently disclosed subject matter relates to a computer-implemented method for placement of an object in a target image by a placement network, in particular for image augmentation. The presently disclosed subject matter further relates to a computer-implemented method for training a placement of an object in an image in particular for image augmentation. The presently disclosed subject matter further relates to a data processing system comprising means for carrying out one of the methods, and to a computer program comprising instructions which, when the program is executed by a computer, cause the computer to carry out one of the methods, and to a computer-readable medium comprising instructions which, when executed by a computer, cause the computer to carry out one of the methods.

### Background of the invention

The invention addresses limitations of current image augmentation techniques, particularly for training machine learning models in areas like object detection and semantic segmentation, specifically within the context of automated driving. Current state-of-the-art methods, such as the copy-paste approach described in [1], while useful, often lack realism and diversity in object placement. These methods typically employ random resizing and placement, which doesn't reflect the real-world distribution and relationships between objects and their surroundings. While more sophisticated approaches, like the one presented in [2], utilize 3D models and physically based rendering to create more realistic synthetic data, they are often constrained by the need for free floor space for object placement and complex scene lighting estimation. Relying on driving maps for object placement introduces further limitations related to map availability, freshness, and inaccuracies in challenging environments like underground parking.

This invention proposes a novel solution to these limitations by introducing a placement component trained to understand the context of a scene and propose plausible object placements based on semantic segmentation maps.

Compared to the state-of-the-art, this approach offers several key advantages:
Unlike random placement strategies [1] or methods restricted to floor placement [2], this invention may leverage semantic segmentation to place objects in contextually relevant locations. This allows for objects to be placed on a wider variety of surfaces and in more realistic arrangements, significantly increasing the diversity and representativeness of the augmented Training data.

Surprisingly, the inventors found out that by using semantic segmentation maps may allow for placing objects more flexibly, since specific object types or environments need not be known in advance when the placement relies on semantic labels. This contrasts with methods tied to specific environments (like indoor scenes in [2]) or reliant on the availability of driving maps, which may not be universally accessible or accurate.

Generating training data for rare or unusual object placements is crucial for robust perception systems. This invention may facilitate the creation of such synthetic training data, addressing the limitations of real-world datasets which often lack sufficient examples of critical edge cases.

Compared to methods requiring 3D models, rendering, and complex lighting estimation [2], this invention simplifies the augmentation pipeline. The use of semantic segmentation maps as input and the learned placement component streamlines the process and allows for greater automation

The proposed training methods, including self-supervised learning and GAN-based training, offer efficient ways to learn realistic placement strategies. These methods can leverage existing labelled data or even unlabelled data, reducing the reliance on expensive and time-consuming manual annotation.
G. Ghiasi et al., "Simple Copy-Paste is a Strong Data Augmentation Method for Instance Segmentation," Jun. 23, 2021, arXiv: arXiv:2012.07177. doi: 10.48550/arXiv.2012.07177.
Y. Ge et al., "3D Copy-Paste: Physically Plausible Object Insertion for Monocular 3D Detection," Dec. 08, 2023, arXiv: arXiv:2312.05277. doi: 10.48550/arXiv.2312.05277.

### Summary of the invention

In a first aspect of the invention, a computer-implemented method for placing an object in a target image, particularly for image augmentation, is proposed. A placement network is used. The placement network is configured to provide a placement proposal. This proposal is based on a first and a second input. The method comprises receiving a first input. This first input comprises one or more semantic segmentation maps of the target image. The method further comprises receiving a second input. This second input comprises one or more objects represented by one or more semantic segmentation maps. The semantic segmentation maps may have different dimensions. The placement network provides one or more placement proposals based on the first and second input. A blending component receives a first input. This input comprises a target image. The target image is represented by a raster image, preferably an RGB version of the first input to the placement network. Optionally, the target image provided to the blending component may also include depth information and/or instance segmentation data, allowing for more precise blending and occlusion handling. The blending component receives a second input. This comprises one or more objects represented by a raster image version of the second input to the placement network. The raster image may be an RGB image or a grayscale image. Similarly, the object representation provided to the blending component may optionally include depth and/or instance segmentation information. The blending component incorporates the objects of the second input into the target image. This incorporation is performed according to one of the placement proposals. The blending component can paste the object into the image with adjustments. The adjustments may include colour pallet adjustments, diffusing the object contour with alpha-blending, relighting the object, dithering, warping or deforming of the object to better fit the target scene geometry. These measures may further enhance realism.

The output of the blending component may be used for image augmentation, the term image augmentation can be understood as the creation of modified versions of existing images. Such image augmentation can be used for increasing size and diversity of a training dataset in order to improve robustness and generalization ability in particular for computer vision. Placement network may refer to a neural network for the placement of an object in an image, wherein placement may refer to choosing the position of an object in an image. A suitable network architecture for the placement component may be a spatial transform network or visual transformers, for example TopNet. A semantic segmentation map may be defined as a pixel-level image classification with each pixel being assigned a label for a specific class. The class may correspond to a semantic category which may be different for each pixel, as opposed to image classification, where each image as a whole may be assigned a single label. Target image may refer to the image into which an object shall be placed. A raster image may refer to an image made up of a grid of pixels, each having one or more color values. Preferably, the raster image is two-dimensional but could also be three-dimensional. An RGB version of a raster image may refer to an image representation where each pixel has three colour channels (red, green and blue), where the values of the colour channels may indicate the intensity of each of the three colour components.

It is proposed that the method may further comprise a physical simulator. This simulator may be configured to provide a semantic segmentation map and an RGB representation of an object. These may be based on received camera parameters and an object type specification. The method may involve receiving camera parameters and receiving an object type specification. The physical simulator may provide an RGB representation of the object and a semantic segmentation map of the object, based on both inputs. The physical simulator preferably passing the RGB representation to the blending component and/or passing the semantic segmentation map to the placement network. The simulator may also optionally generate other relevant information, such as depth maps, instance segmentation masks, and material properties, to provide a more comprehensive representation of the object. This allows for more realistic training data by taking into account the full 3D shape and pose of the object, as well as camera perspective. Additionally, the simulator can be used to generate variations of the same object with different textures, lighting conditions, and poses, further increasing the diversity of the training data. Physical simulation refers to applying the laws of physics to emulate and/or predict a system behaviour and/or system state. In the context of image classification, physical simulation can refer to emulating and/or predicting a realistic image and/or parts of an image. In this case, the system state describes part of the image and their relation. The objects used in the physical simulator may be of different origins. Instead of a physical simulation, the objects may be extracted from real images and/or generated by a generative Al model.

It is proposed that the placement network may be configured to receive further inputs. These further inputs may comprise a third input including instance segmentation. This may provide identification and separation of objects within an image. The further inputs may alternatively or additionally comprise a fourth input. This input may comprise image depth and/or RGB values. This additional information may be used to refine the placement proposals, ensuring that objects are placed in physically plausible and visually consistent locations within the scene. The placement component may provide one or more placement proposals based on the first, second, and further inputs. These placement proposals may comprise a location. The location may be represented as a centre point or a bounding box. The placement proposal may optionally include a resizing and/or a rotation. Furthermore, the placement proposal may also optionally include other parameters such as shear, perspective transformation, or other affine transformations, allowing for greater flexibility in object placement.

It is proposed that the blending component may perform visual adjustments, these may include pixel value transformations for harmonizing the visual appearance of object and/or target image. The blending component may use a diffusion model, for example ControlCom [3]. Using a diffusion model may provide high consistency between an object and its surroundings, as well as being adaptable to different blending scenarios. Pixel value transformations may include colour pallet adjustments. These adjustments may match the object colour pallet with the target image colour pallet. The visual adjustments may also include boundary smoothing to mitigate discontinuities, for example alpha-blending by adjusting the opacity of the object and the target image. This may be done for diffusing the object contour. The visual adjustments may further include illumination harmonization of the object to match the target image illumination. This may comprise for example re-lighting of the object to match the light source in both object and target image. The visual adjustments may further comprise artifact suppression to reduce visual artifacts such as dithering, by adding noise to the object. This may, in particular, reduce banding effects. Additionally, the blending component may use advanced compositing techniques, such as Poisson image editing or gradient domain blending, to achieve even more seamless and realistic integration of the placed objects. This leads to higher-quality augmented images and improves the performance of downstream machine learning models.

In a second aspect of the invention, a computer-implemented method for training the placement of an object in an image, particularly for image augmentation, is proposed. The placement network is suited for providing a placement proposal. The placement proposal is based on a first and second input received. The method comprises receiving a first input of the placement network. This first input comprises an image not including the object intended for placement. This image is represented by one or more semantic segmentation maps. The method further comprises receiving a second input. This second input comprises one or more objects intended for placement. These objects are represented by one or more semantic segmentation maps. The method involves performing training of a placement network. This training is based on the first and second semantic segmentation maps. The training comprises obtaining a placement by applying the network to the first and second semantic segmentation maps. The method further involves calculating a positional loss for the placement and optionally calculating a scaling loss for the placement. The scaling loss may correspond to the area ratio of the object intended for placement and the area of an object that was removed from the image not including the object intended for placement. Finally, the method comprises adjusting the weights of the placement network based on the calculated positional loss and optionally the scaling loss. Different loss functions may be employed for the positional loss, such as L1, L2, or perceptual losses, to optimize for different aspects of placement accuracy and realism. This allows for tailoring the training process to specific application requirements and achieving optimal performance. Furthermore, the training process may incorporate techniques such as curriculum learning or data augmentation to improve the network's generalization ability and robustness.

It is proposed that the method of the second aspect of the invention may further comprise performing self-supervised training of the placement network. The first input may be generated from a ground truth image. This image may comprise the object of the type of the object intended for placement. The object may be removed to generate the first input. The removal process may involve sophisticated inpainting techniques to ensure realistic background reconstruction after object removal. The second input may comprise the removed object. Calculating the positional loss may be based on the placement proposal and a placement extracted from the ground truth image. The positional loss may also incorporate other factors, such as the overlap between the predicted and ground truth bounding boxes or the distance between key points on the object.

It is proposed that removing the contained object may comprise removing the semantic labels of the object from the semantic segmentation map of the ground truth image. These removed semantic labels may be replaced with semantic labels of the object background. Flood-filling the surrounding semantic labels or employing a dedicated neural network for removing the semantic labels. The placement network may provide a semantic segmentation map of a modified image. An object of the type of the object intended for placement may have been removed from this image. The dedicated neural network used for label replacement may be trained on a separate dataset of similar images to improve accuracy and consistency. This ensures that the replaced labels blend seamlessly with the surrounding context and do not introduce artifacts.

It is proposed that the method of the second aspect of the invention may further comprise unsupervised training of the placement network. The training may comprise a generative adversarial network (GAN). The placement network may be used as a generator network within the GAN. This generator network may generate an augmented image based on the two inputs of the placement network. A discriminator network may be included within the GAN. This discriminator network may distinguish between augmented and non-augmented images based on two inputs provided by the generator network. Calculating the positional loss may comprise calculating a discriminative loss. The architecture of the discriminator network can be tailored to the specific characteristics of the target images and objects, for example, by using a PatchGAN architecture to focus on local realism. This improves the quality of the generated placements by ensuring consistency at a finer level of detail. Furthermore, advanced GAN training techniques, like spectral normalization or gradient penalty, can be incorporated to stabilize training and prevent mode collapse.

It is proposed that the method may further involve the generator network receiving the first and second inputs to the placement network. The method may further comprise calculating a heatmap of possible placements of the size of the first input. The second input to the placement network may be pasted into the first input at the position of the maximum value of the heatmap. Alternatively, multiple placements can be sampled from the heatmap based on their probability values, promoting diversity in the generated augmented images. A label may be attached to the combination of the first and second inputs, identifying this image as augmented. This augmented image may be provided to the discriminator network. The discriminator network may receive the augmented image and a non-augmented image. The non-augmented image may contain an object of the type contained in the augmented image. This may be done for distinguishing between the two images. The discriminator network may additionally receive other relevant information, such as depth maps or instance segmentation maps, to better assess the realism of the generated placements. The heatmap represents a probability distribution over possible placement locations. The heatmap may be calculated by one or more dedicated layers in the placement network which may generate a spatially structured heatmap. The one or more dedicated layers may be implemented as convolutional layers followed by a softmax or sigmoid activation to represent probability values.

The method may further comprise semantic segmentation-guided object placement in images representing driving scenes. These may be from the perspective of a front camera, rear camera or side camera mounted in a road vehicle. The camera may also be a fisheye camera. Objects may include vulnerable road users. Vulnerable road users may include rare instances such as wheelchairs, prams, and/or children on toy vehicles. Objects may also include rare and/or region- and/or country-specific road signs, lost cargo, open manholes, and/or rare vehicles. Rare vehicles may include construction vehicles, agricultural vehicles, emergency vehicles, and/or post-accident vehicles. This may be done for improvement of detection algorithms for these driving scenes. Semantic segmentation-guided can mean that target images and objects are represented as semantic segmentation maps to enable the placement of objects in an image.

The generated augmented data can be used to train object detection and semantic segmentation models to specifically improve their performance on these challenging and safety-critical scenarios. Similarly, models for volumetric occupancy and semantic occupancy tasks may be trained. This targeted approach allows for addressing the long tail problem in perception systems and improves their robustness in real-world driving situations.

The method may further comprise the utilization of the outputted target images for image augmentation for training an image classifier. The image classifier may be used to assign one or more classes to an image and/or pixels in an image. The image classifier may provide the output classification based on input pixels from the training data. The output classification may be used in a detection algorithm. The augmented data can also be used for training other types of machine learning models, such as depth estimation networks, 3D object detection models, or motion prediction models. Expanding the applications further reinforces the versatility of the proposed data augmentation technique.

In a further aspect of the invention an apparatus is proposed which is configured to carry out the first and second aspects of the invention.

In a further aspect of the invention a computer program is proposed which comprises instructions. When the program is executed by a computer, these instructions may cause the computer to carry out the first and second aspects of the invention.

In a further aspect of the invention a computer-readable medium is proposed which comprises instructions. When executed by a computer, these instructions may cause the computer to carry out the first and second aspects of the invention.

Embodiments of the invention will be discussed with reference to the following figures in more detail. The figures show:
- Figure 1: a schematic flow diagram of an embodiment of the invention;
- Figure 2: a schematic flow diagram of an embodiment of the invention;
- Figure 3: a schematic system of an embodiment of the invention.

Zhang, Bo, et al. "Controlcom: Controllable image composition using diffusion model." arXiv arXiv:2308.10040 (2023).

### Detailed description of embodiments

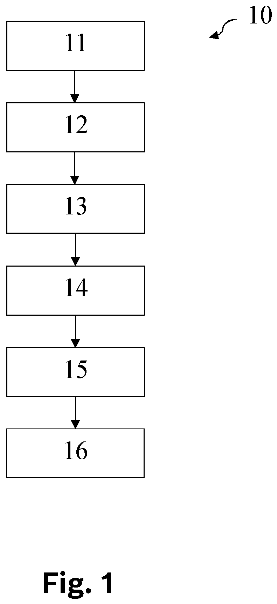

Figure 1 schematically shows an example of a flow of a method for the placement (20) of an object in a target image by a placement network according to an embodiment of the invention. The placement network may be configured to provide a placement proposal based on a first and a second input received. The first input of the placement network may be received (11), comprising one or more semantic segmentation maps of the target image. Segmentation maps may be obtained from existing segmentation models and may depict, for example, a street scene with labelled regions such as cars, pedestrians, roads, and buildings. The second input of the placement network may be received (12), comprising one or more objects represented by one or more semantic segmentation maps. The second input may for example be the segmentation map of a car, obtained either by segmenting a real image or by rendering a 3D car model. One or more placement proposals may be provided (13) by the placement network based on the first and second input. The placement network may for example have a U-Net architecture and may output a heatmap indicating likely positions or parameters for a bounding box, scale, and rotation. A first input to a blending component may be received (14) comprising a target image represented by a raster image version of the first input to the placement network. The target image may be the original raster image of a street scene. A second input to a blending component may be received (15) comprising one or more objects represented by a raster image version of the second input to the placement network. The second input may be the raster image of the car, corresponding to the provided segmentation map, for example cropped from another image or rendered from a 3D model. The one or more objects of the second input may be incorporated (16) into the target image by the blending component according to one of the placement proposals. The blending process may involve techniques such as Poisson image editing, colour histogram matching and/or adding shadows for increased realism. The output would then be an augmented image of the street scene with the inserted car.

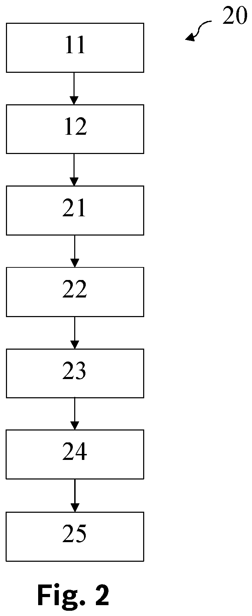

Figure 2 schematically shows an example of a flow of a training method (20) of the placement model for the placement of an object in an image according to an embodiment of the invention. A first input of the placement network may be received (11), comprising an image not including the object intended for placement represented by one or more semantic segmentation maps. This may for example be a semantic segmentation map of a street scene, excluding any cars, generated by a semantic segmentation model. A second input of the placement network may be received (12), comprising one or more objects intended for placement represented by one or more semantic segmentation maps. This may be for example a semantic segmentation map of a car, obtained from a labelled dataset or rendered from a 3D model. A training of the placement network may be performed (21) based on the first and second semantic segmentation maps. This training may involve using a convolutional neural network, for example a U-Net architecture, with a loss function combining positional and scaling terms. The training process may utilize stochastic gradient descent with backpropagation. A placement may be obtained (22) by applying the network to the first and the second semantic segmentation map. The network may output a heatmap representing probably placement locations. Alternatively, it may directly output bounding box coordinates and a scaling factor. During the training, a positional loss for the placement may be calculated (23). This loss may be the L2 distance between the predicted placement and the ground truth placement. Furthermore, a scaling loss for the placement may be calculated (24). This loss may be the absolute difference between the predicted scale and the ground truth scale. The weights of the placement network may be adjusted (25) based on the calculated loss for the placement. Such an adjustment may be done using an optimization algorithm. The optimization may be carried out iteratively. During the iterative optimization, the optimization algorithm may be repeated several times in a row. Preferably, for the iterative training, a single set of training data may be used.

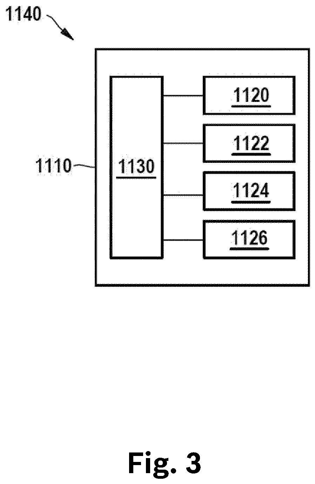

Figure 3 shows a processor system 1140 which may comprise or represent a system configured to perform a training and/or using method 10, 20 as described elsewhere in this specification. The processor system 1140. The processor system 1140 may comprise one or more subsystems or components 1110. For example, a processing subsystem 1120 may be provided for executing computer program components to perform a method 10, 20. This processing subsystem 1120 may be a multi-core CPU, a GPU, or a specialized Al accelerator chip, allowing for efficient parallel processing of the semantic segmentation maps and training of the placement network. A memory 1122 may be provided for storing programming code and/or data. Specifically, the memory 1122 may be RAM, ROM, or a combination of different memory types, such as high-bandwidth memory (HBM) for faster access to the large datasets used in training deep learning models. A communication subsystem 1126, such as a network interface, may allow communication with other entities. For example, the communication subsystem 1126 may be an Ethernet card, a Wi-Fi adapter, or a cellular modem, enabling the system to communicate with other computers or cloud-based resources for distributed training or data storage. This communication may be used to distribute the training process across multiple GPUs or machines, or to access large datasets stored remotely. In some examples, a dedicated integrated circuit 1124 may be provided for performing part or all of the processing related to a method described elsewhere in this specification. This dedicated IC 1124 may be a Field-Programmable Gate Array (FPGA) or an Application-Specific Integrated Circuit (ASIC) designed specifically for the operations performed by the placement network or the blending component. This may significantly accelerate the inference and training processes, enabling real-time performance for applications like autonomous driving. The processing subsystem 1120, the memory 1122, the dedicated IC 1124 and the communication subsystem 1126 may be connected to each other via an interconnect 1130, say a bus. This interconnect 1130 may be a PCIe bus, a system bus, or a network fabric, ensuring high-speed data transfer between the different components of the system. While system 1140 is shown as including one of each described component, the various components may be duplicated in various embodiments. For example, the processing subsystem 1120 may include multiple microprocessors that are configured to independently execute a method as described in this specification or are configured to perform steps or subroutines of a method described herein such that the multiple processors cooperate to achieve the functionality described in this specification. These multiple processors could be configured in a distributed computing cluster, allowing for parallel processing of large datasets and faster training times.

## Claims

1. A computer-implemented method for placement of an object in a target image by a placement network, in particular for image augmentation,
wherein the placement network is configured to provide a placement proposal based on a first and a second input received,
wherein the method comprises
receiving (11) the first input of the placement network comprising one or more semantic segmentation maps of the target image,
receiving (12) the second input of the placement network comprising one or more objects represented by one or more semantic segmentation maps,
providing (13) one or more placement proposals by the placement network based on the first and second input,
receiving (14) a first input to a blending component comprising the target image represented by a raster image version of the first input to the placement network, receiving (15) a second input to the blending component comprising one or more objects represented by a raster image version of the second input to the placement network,
incorporating (16) the one or more objects of the second input into the target image by the blending component according to one of the placement proposals.

2. A method according to claim 1, further comprising
a physical simulator configured to provide a semantic segmentation map and a raster image representation of an object based on received camera parameters and object type specification received,
wherein the method comprises
receiving camera parameters to the physical simulator,
receiving an object type specification to the physical simulator,
providing a raster image representation of the object by the physical simulator based on both the camera parameters and the object type specification,
providing a semantic segmentation map of the object by the physical simulator based on both the camera parameters and the object type specification.

3. A method according to one of the preceding claims, further comprising the placement network configured to receive further inputs, wherein the further inputs comprise
a third input comprising instance segmentation providing an identification and separation of objects within an image, and/or a fourth input comprising image depth and/or RGB values and/or pixel intensity,
the method comprising
the placement component providing (13) one or more placement proposals based on the first and second input and the further inputs,
wherein the one or more placement proposals comprise
a location represented as a centre point or a bounding box, optionally a resizing, optionally a rotation.

4. A method according to one of the preceding claims, further comprising the blending component performing visual adjustments,
in particular
pixel value transformations for harmonizing the visual appearance of object and/or target image,
boundary smoothing to mitigate discontinuities,
illumination harmonization of the object to match the target image illumination, and/or artifact suppression to reduce visual artifacts.

5. A computer-implemented method for training a placement of an object in an image in particular for image augmentation,
wherein the placement network is suited for providing a placement proposal based on a first and second input received,
wherein the method comprises
receiving (11) a first input of the placement network comprising an image not including the object intended for placement represented by one or more semantic segmentation maps,
receiving (12) a second input of the placement network comprising one or more objects intended for placement represented by one or more semantic segmentation maps,
performing (21) training of a placement network based on the first and second semantic segmentation maps,
wherein the training comprises
obtaining (22) a placement by applying the network to the first and the second semantic segmentation map,
calculating (23) a positional loss for the placement,
adjusting (25) the weights of the placement network based on the calculated loss for the placement.

6. A method according to claim 5, wherein the method comprises performing self-supervised training of the placement network,
wherein the first input was generated from a ground truth image comprising the object intended for placement by removing the contained object intended for placement,
wherein the second input is the removed object,
wherein calculating the positional loss is based on the placement proposal and a placement extracted from the ground truth image.

7. A method according to claim 6,
wherein the step of removing the contained object comprises removing the semantic labels of the object from the semantic segmentation map of the ground truth image, replacing the semantic labels of the object with semantic labels of the object background,
flood-filling the surrounding semantic labels or employing a dedicated neural network for removing the semantic labels.

8. A method according to claim 5, wherein the method comprises unsupervised training of the placement network,
the training comprising a generative adversarial network comprising the placement network being used as a generator network within the generative adversarial network for generating an augmented image based the two inputs of the placement network,
a discriminator network within the generative adversarial network for distinguishing between augmented image and non-augmented image based on two inputs provided by the generator network,
calculating the positional loss comprising a discriminative loss.

9. A method according to claim 8,
wherein the method comprises
the generator network receiving the first input to the placement network,
the generator network receiving the second input to the placement network, calculating a heatmap of the size of the first input,
pasting the second input to the placement network into the first input to the placement network at the position of the maximum value of the heatmap,
attaching a label to the combination of first and second input identifying this image as augmented,
providing the augmented image to the discriminator network,
the discriminator network receiving the augmented image,
the discriminator network receiving a non-augmented image containing an object of the type contained in the augmented image for distinguishing between the two images.

10. A method according to one of the preceding claims wherein the method comprises semantic segmentation-guided object placement in images representing driving scenes in particular from the perspective of a front camera in particular mounted on the windshield of a road vehicle,
objects for placement including
vulnerable road users, in particular rare instances such as wheelchairs, prams, children on toy vehicles,
in particular rare and/or region- and/or country-specific road signs,
lost cargo,
open manholes,
rare vehicles, in particular construction vehicles, agricultural vehicles, emergency vehicles, post-accident vehicles,
for improvement of detection algorithms for these driving scenes.

11. A method according to one of the preceding claims wherein the outputted target image being used for image augmentation, wherein the augmented image is used for training an image classifier.

12. A data processing system comprising means for carrying out the method of claim 1-11.

13. A computer program comprising instructions which, when the program is executed by a computer, cause the computer to carry out the method of claim 1-11.

14. A computer-readable medium comprising instructions which, when executed by a computer, cause the computer to carry out the method of claim 1-11.

## Amended claims

### Amended claims in accordance with Rule 137(2) EPC.

1. A computer-implemented method for training a placement of an object in an image in particular for image augmentation,
wherein the placement network is suited for providing a placement proposal based on a first and second input received,
wherein the method comprises
receiving (11) a first input of the placement network comprising an image not including the object intended for placement represented by one or more semantic segmentation maps, receiving (12) a second input of the placement network comprising one or more objects intended for placement represented by one or more semantic segmentation maps, performing (21) training of a placement network based on the first and second semantic segmentation maps,
wherein the training comprises
obtaining (22) a placement by applying the network to the first and the second semantic segmentation map,
calculating (23) a positional loss for the placement,
adjusting (25) the weights of the placement network based on the calculated loss for the placement
**characterized in that** the training of the placement network is unsupervised the training comprising a generative adversarial network comprising the placement network being used as a generator network within the generative adversarial network for generating an augmented image based on the two inputs of the placement network,
a discriminator network within the generative adversarial network for distinguishing between augmented image and non-augmented image based on two inputs provided by the generator network,
calculating the positional loss comprising a discriminative loss.

2. A method according to claim 1, wherein the method comprises
performing self-supervised training of the placement network,
wherein the first input was generated from a ground truth image comprising the object intended for placement by removing the contained object intended for placement,
wherein the second input is the removed object,
wherein calculating the positional loss is based on the placement proposal and a placement extracted from the ground truth image.

3. A method according to claim 2,
wherein the step of removing the contained object comprises removing the semantic labels of the object from the semantic segmentation map of the ground truth image,
replacing the semantic labels of the object with semantic labels of the object background,
flood-filling the surrounding semantic labels or employing a dedicated neural network for removing the semantic labels.

4. A method according to claim 1,
wherein the method comprises
the generator network receiving the first input to the placement network,
the generator network receiving the second input to the placement network,
calculating a heatmap of the size of the first input,
pasting the second input to the placement network into the first input to the placement network at the position of the maximum value of the heatmap,
attaching a label to the combination of first and second input identifying this image as augmented,
providing the augmented image to the discriminator network,
the discriminator network receiving the augmented image,
the discriminator network receiving a non-augmented image containing an object of the type contained in the augmented image for distinguishing between the two images.

5. A method according to one of the preceding claims wherein the method comprises semantic segmentation-guided object placement in images representing driving scenes in particular from the perspective of a front camera in particular mounted on the windshield of a road vehicle,
objects for placement including
vulnerable road users, in particular rare instances such as wheelchairs, prams, children on toy vehicles,
rare and/or region- and/or country-specific road signs,
lost cargo,
open manholes,
rare vehicles, in particular construction vehicles, agricultural vehicles, emergency vehicles, post-accident vehicles,
for improvement of detection algorithms for these driving scenes.

6. A method according to one of the preceding claims wherein the outputted target image being used for image augmentation, wherein the augmented image is used for training an image classifier.

7. A computer-implemented method trained according to one of the preceding claims for placement of an object in a target image by a placement network, in particular for image augmentation,
wherein the placement network is configured to provide a placement proposal based on a first and a second input received,
wherein the method comprises
receiving (11) the first input of the placement network comprising one or more semantic segmentation maps of the target image,
receiving (12) the second input of the placement network comprising one or more objects represented by one or more semantic segmentation maps,
providing (13) one or more placement proposals by the placement network based on the first and second input,
receiving (14) a first input to a blending component comprising the target image represented by a raster image version of the first input to the placement network,
receiving (15) a second input to the blending component comprising one or more objects represented by a raster image version of the second input to the placement network, incorporating (16) the one or more objects of the second input into the target image by the blending component according to one of the placement proposals.

8. A method according to claim 8, further comprising
a physical simulator configured to provide a semantic segmentation map and a raster image representation of an object based on received camera parameters and object type specification received,
wherein the method comprises
receiving camera parameters to the physical simulator,
receiving an object type specification to the physical simulator,
providing a raster image representation of the object by the physical simulator based on both the camera parameters and the object type specification,
providing a semantic segmentation map of the object by the physical simulator based on both the camera parameters and the object type specification.

9. A method according to claims 8 and/or 9, further comprising
the placement network configured to receive further inputs, wherein the further inputs comprise
a third input comprising instance segmentation providing an identification and separation of objects within an image, and/or a fourth input comprising image depth and/or RGB values and/or pixel intensity,
the method comprising
the placement component providing (13) one or more placement proposals based on the first and second input and the further inputs,
wherein the one or more placement proposals comprise
a location represented as a centre point or a bounding box, optionally a resizing, optionally a rotation.

10. A method according to one of the preceding claims, further comprising the blending component performing visual adjustments,
in particular
pixel value transformations for harmonizing the visual appearance of object and/or target image,
boundary smoothing to mitigate discontinuities,
illumination harmonization of the object to match the target image illumination, and/or artifact suppression to reduce visual artifacts.

11. A data processing system comprising means for carrying out the method of any of claims 1-11.

12. A computer program comprising instructions which, when the program is executed by a computer, cause the computer to carry out the method of any of claims 1-11.

13. A computer-readable medium comprising instructions which, when executed by a computer, cause the computer to carry out the method of any of claims 1-11.
